# EUROPEAN PATENT SPECIFICATION

(11) **EP 1 880 091 B1**
(45) Date of publication and mention of the grant of the patent: **25.03.2009**
(21) Application number: 06724396.4
(22) Date of filing: 11.04.2006
(51) Int. Cl.: F01N 3/021, F01N 3/08

(54) **EXHAUST GAS POST -TREATMENT SYSTEM**
ABGASNACHBEHANDLUNGSSYSTEM
SYSTEME DE POST-TRAITEMENT DE GAZ D'ECHAPPEMENT

(30) Priority: 21.04.2005 IT MI20050715
(43) Date of publication of application: 23.01.2008
(73) Proprietor: Colamussi, Arturo, 44100 Ferrara (IT)
(72) Inventor: Colamussi, Arturo, 44100 Ferrara (IT)
(74) Representative: Fanzini, Valeriano
(86) International application number: PCT/EP2006/003537
(87) International publication number: WO 2006/111354

(56) References cited:
- US-A- 3 417 549
- US-B1- 6 185 934

## Description

The present invention concerns an exhaust gas post-treatment system in particular of internal combustion engines.

It is known that the combustion of a fuel causes the formation, in addition to completely oxidised products - CO₂, H₂O -, also of a large number of secondary products, like non-combusted or partially combusted hydrocarbons, pyrolysis products and derivatives including soot.

In the case of Diesel engines soot is the main culprit for the formation of particulate, since providing a large specific surface allows the deposit of hydrocarbons, fuel aerosol or non-combusted lubricants and the like.

As well as the general problem of an increase in pollution of the environment, it is also suspected that particulate is a cancerogenous agent.

Amongst the measures that can be used to modify the composition of the exhaust gases in internal combustion engines, so-called post-treatment measures of emissions are becoming increasingly important.

A problem connected with post-treatment systems like for example the installation of an anti-particulate filter on a vehicle equipped with a thermal engine, in particular with spontaneous ignition, is due to the fact that it constitutes a modification of the structural, functional and equipment characteristics of the vehicle itself.

In the case of filtration of exhaust gases of a Diesel engine, the anti-particulate filter, be it arranged in series with the approved muffler or replacing it, generally creates a variation in the counterpressure at the exhaust and in the noisiness of the vehicle itself.

It is for this reason that the testing and validation bodies (Traffic Control Authority) require that all new characteristics be tested and that the vehicle and/or engine manufacturer gives the go-ahead.

This implies complexity and unacceptable times for carrying out the installation of post-treatment systems in general and of anti-particulate filters for Diesel engines, on vehicles that require such an intervention.

A device for filtering internal combustion engine exhaust gases is known for example from document US 6 185 934 B1, wherein an electrostatic filtering chamber, equipped with electrostatic filtering means, is provided for filtering the exhaust gases sucked from the exhaust silencer box outlet orifice of a motor vehicle. Another known exhaust filter device is shown for example in document US 3 417 549.

The Applicant has set itself the problem of how to reduce the concentration of harmful substances present in the exhaust gases of an internal combustion engine without interfering with the exhaust system of the engine itself.

The Applicant has solved the aforementioned problem by devising an exhaust gas post-treatment system according to what is outlined in claim 1.

Further characteristics of the invention form the object of the dependent claims.

The exhaust gas post-treatment system of an internal combustion engine according to the present invention intercepts the gases downstream of the muffler of the exhaust unit through an aspirator and feeds them to a blasting device that takes care of reducing the concentration of harmful substances, the aspirator has a flow rate of no less than the maximum volumetric flow rate of the exhaust gases and a pressure suitable for overcoming the maximum load losses of the blasting device, and it is equipped with a motor able to be operatively connected to the internal combustion engine so as to optimise the flow rate of the gases emitted by the internal combustion engine.

The system according to the present invention can be installed without interfering with the exhaust system and therefore counterpressure and noisiness of the internal combustion engine remain the same as when approved and validated by the competent bodies.

The installation of the system according to the present invention can therefore be carried out on any vehicle without requiring another validation.

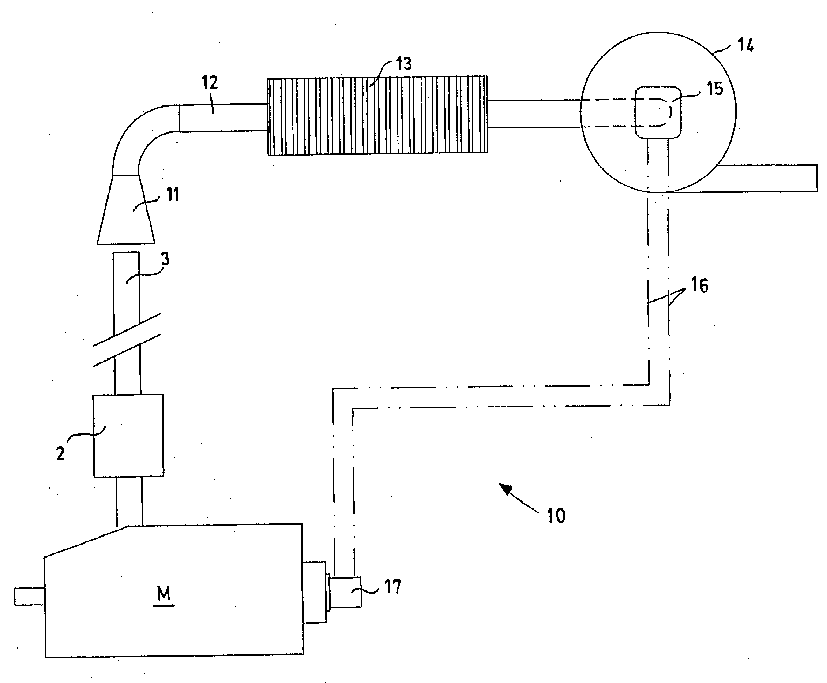

The characteristics and advantages of an exhaust gas post-treatment system according to the present invention shall become clearer from the following description, given as a non-limiting example, referring to the attached figure in which a schematic view of the system is shown according to one of the possible embodiments of the invention.

The present invention provides an exhaust gas post-treatment system 10 for blasting harmful substances, by harmful substances meaning secondary combustion products, like non-combusted or partially combusted hydrocarbons, pyrolysis products and derivatives including soot and the like.

The system 10 is arranged downstream of the muffler 2 of an internal combustion engine M.

In particular, the system 10 is arranged downstream of the exhaust pipe 3 of the muffler 2 and has a suction cone 11, suitable for shielding the passage portion, i.e. the exhaust gas intake, from the turbulence due to the motion of the vehicle and to environmental conditions.

The suction cone 11 is connected through piping 12 to a blasting device 13 of the harmful substances present in the exhaust gases.

Depending upon the engine to which it must be applied, the system comprises a blasting device 13 mainly suitable for filtering particulate, in the case of Diesel engines, or dedicated to the treatment of the other polluting emissions in gas form or in the form of an aerosol in the case of controlled ignition engines.

In the case of a Diesel engine the blasting device can have both types of treatment, whereas in the case of a controlled ignition engine just the blasting device of volatile substances may be sufficient given the low soot production of this engine.

The system comprises an aspirator 14 with a flow rate equal to or greater than the maximum volumetric flow rate of the exhaust gases and with a pressure suitable for overcoming the maximum load losses of the blasting device.

The aspirator 14 that can be of the centrifugal or volumetric type can be installed upstream or downstream of the blasting device 13.

In the present embodiment, the aspirator 14 is installed downstream of the blasting device, since it advantageously works on gas that has already been treated.

The Applicant has discovered that one of the characteristics necessary for the post-treatment system to work correctly is that the sucked flow rate is as close as possible so as not to interfere with the volumetric flow rate of the exhaust gases.

To obtain such a result the Applicant has operatively connected the motor 15 of the aspirator to the internal combustion engine M.

According to the type of engine, such a connection can be made in different ways.

According to a first way, exemplified in the figures, an oleodynamic motor 15 has been used, fed through an oleodynamic pump 17 connected to the engine M through feed piping 16.

In this way a substantially direct proportionality is achieved between flow rate of the emissions of the engine M and flow rate of the suction system 10 sufficient to capture the emissions at any rotation speed of the engine.

In another totally equivalent embodiment, in the case of motorisation of the aspirator through an electric motor both in direct current and in alternating current, a control module is foreseen that varies the speed of the motor of the aspirator according to the number of revolutions of the internal combustion engine with the most suitable dependency law.

Moreover, Diesel engines can be connected directly to the motor 15 of the aspirator with mechanical transmission systems or with gears or belt-pulley systems or similar.

The blasting device can also be made by arranging a filter for the particulate and a device for treating volatile substances, aeriforms and aerosols, in series, in which the device for treating aeriforms and aerosols can be preceded or followed by the filter.

Of course, when sizing the aspirator it is necessary to keep in mind that the filter will have gradually increasing degrees of clogging up until the moment when it has to be replaced or regenerated.

The system from this point of view has the advantage of not imposing upon the manufacturer links to the maximum counterpressure allowed of the motor.

## Claims

1. Exhaust gas post-treatment system (10) of an internal combustion engine (M), arranged to intercept the gases downstream of the muffler (2) of the exhaust unit through an aspirator (14) and feed them to a blasting device (13) that takes care of reducing the concentration of harmful substances, the aspirator (14) having a flow rate no less than the maximum volumetric flow rate of the exhaust gases and a pressure suitable for overcoming the maximum load losses of the blasting device (13), **characterized in that** the aspirator (14) is equipped with a motor (15) operatively connected to the internal combustion engine (M) and provided with means able to achieve a substantially direct proportionality between flow rate of the emissions of the internal combustion engine (M) and flow rate of the exhaust gas post-treatment system (10) sufficient to capture the emissions at any rotation speed of the internal combustion engine (M).

2. Post-treatment system (10) according to claim 1, in which said aspirator (14) is installed downstream of the blasting device (13).

3. Post-treatment system (10) according to claim 1, in which said motor (15) of the aspirator (14) is an oleodynamic motor and in that said means comprise an oleodynamic pump (17) connected to the internal combustion engine (M) through feed piping (16) and able to feed said oleodynamic motor (15).

4. Post-treatment system (10) according to claim 1, in which said motor (15) of the aspirator (14) is an electric motor in direct current or in alternating current and in that said means comprise a control module connected to the internal combustion engine, said control module being suitable for varying the speed of the electric motor (15) of the aspirator according to the number of revolutions of the internal combustion engine (M) with the most advantageous dependency law.

5. Post-treatment system (10) according to claim 1, in which said motor (15) of the aspirator (14) is connected to the internal combustion engine (M) through mechanical transmission systems or with gears or belt-pulley systems.

6. Post-treatment system (10) according to claim 1, in which said aspirator (14) is of the centrifugal or volumetric type.

7. Post-treatment system (10) according to claim 1, in which said system (10) is arranged downstream of the end of the exhaust pipe (3) of the muffler (2) and has a suction cone (11).

8. Post-treatment system (10) according to claim 1, in which said blasting device (13) has a filter for filtering particulate preceded or followed by a blasting device of aeriforms or aerosols.

9. Post-treatment system (10) according to claim 1, in which said blasting device (13) is a blasting device of volatile substances, aeriforms and aerosols.

10. Post-treatment system (10) according to claim 1, in which said blasting device (13) is a filter for particulate.

## Patentansprüche

1. Abgasnachbehandlungssystem (10) eines Verbrennungsmotors (M), dafür eingerichtet, dass es die Gase stromabwärts vom Schalldämpfer (2) der Auspuffeinheit durch ein Sauggebläse (14) auffängt und dann einer Vorrichtung (13) zur Emissionsminderung zuführt, die für eine Verringerung der Schadstoffkonzentration sorgt, wobei das Sauggebläse (14) einen Förderstrom, der nicht geringer als der maximale Volumenstrom der Abgase ist, und einen Druck, der für die Bewältigung der maximalen Druckverluste der Vorrichtung (13) zur Emissionsminderung angemessen ist, aufweist, **dadurch gekennzeichnet, dass** das Sauggebläse (14) mit einem Motor (15) ausgestattet ist, der mit dem Verbrennungsmotor (M) funktional verbunden ist, und mit Mitteln versehen ist, die imstande sind, zwischen dem Lieferstrom der Emissionen vom Verbrennungsmotor (M) und dem Förderstrom des Abgasnachbehandlungssystems (10), der ausreicht, um die Emissionen bei jeder Drehzahl des Verbrennungsmotors (M) abzufangen, eine im Wesentlichen direkte Proportionalität zu erzielen.

2. Nachbehandlungssystem (10) nach Anspruch 1, wobei das Sauggebläse (14) stromabwärts von der Vorrichtung (13) zur Emissionsminderung eingebaut ist.

3. Nachbehandlungssystem (10) nach Anspruch 1, wobei der Motor (15) des Sauggebläses (14) ein Hydraulikmotor ist und wobei die Mittel eine Hydraulikpumpe (17) umfassen, die über eine Zuleitung (16) an den Verbrennungsmotor (M) angeschlossen ist und imstande ist, den Hydraulikmotor (15) zu speisen.

4. Nachbehandlungssystem (10) nach Anspruch 1, wobei der Motor (15) des Sauggebläses (14) ein Gleichstrom- oder Wechselstrommotor ist und wobei die Mittel ein Steuermodul umfassen, das an den Verbrennungsmotor angeschlossen ist, wobei sich das Steuermodul dafür eignet, die Drehzahl des Elektromotors (15) des Sauggebläses entsprechend der Umdrehungszahl des Verbrennungsmotors (M) nach dem vorteilhaftesten Abhängigkeitsgesetz zu verändern.

5. Nachbehandlungssystem (10) nach Anspruch 1, wobei der Motor (15) des Sauggebläses (14) über mechanische Kraftübertragungssysteme oder Getriebe oder Riemen-Scheibe-Systeme mit dem Verbrennungsmotor (M) verbunden ist.

6. Nachbehandlungssystem (10) nach Anspruch 1, wobei das Sauggebläse (14) vom Radialtyp oder vom volumetrisch wirksamen Typ ist.

7. Nachbehandlungssystem (10) nach Anspruch 1, wobei das System stromabwärts vom Ende der Abgasleitung (3) des Schalldämpfers (2) angeordnet ist und eine Ansaugdüse (11) aufweist.

8. Nachbehandlungssystem (10) nach Anspruch 1, wobei die Vorrichtung (13) zur Emissionsminderung ein Filter zur Partikelfilterung aufweist, dem eine Reinigungsvorrichtung für Gase oder Aerosole vorausgeht oder folgt.

9. Nachbehandlungssystem (10) nach Anspruch 1, wobei die Vorrichtung (13) zur Emissionsminderung eine Reinigungsvorrichtung für flüchtige Substanzen, Gase und Aerosole ist.

10. Nachbehandlungssystem (10) nach Anspruch 1, wobei die Vorrichtung (13) zur Emissionsminderung ein Partikelfilter ist.

## Revendications

1. Un système (10) de post-traitement des gaz d'échappement d'un moteur (M) à combustion interne, disposé pour intercepter les gaz en aval du silencieux (2) du système d'échappement par l'intermédiaire d'un aspirateur (14) et pour les alimenter à un dispositif de neutralisation (13) destiné à réduire la concentration de substances nocives, tel aspirateur (14) ayant un débit qui n'est pas inférieur au débit volumétrique maximum des gaz d'échappement et une pression appropriée pour vaincre les pertes de charge maximales du dispositif de neutralisation (13), ledit système étant **caractérisé en ce que** l'aspirateur (14) est équipé d'un moteur (15) opérationnellement relié au moteur (M) à combustion interne et doté de moyens servants à établir une proportionnalité essentiellement directe, entre le débit des émissions du moteur (M) à combustion interne et le débit du système (10) de post-traitement des gaz d'échappement, devant être suffisante pour capturer les émissions quelle que soit la vitesse de rotation du moteur (M) à combustion interne.

2. Le système (10) de post-traitement selon la revendication 1, **caractérisé en ce que** ledit aspirateur (14) est installé en aval du dispositif de neutralisation (13).

3. Le système (10) de post-traitement selon la revendication 1, **caractérisé en ce que** ledit moteur (15) de l'aspirateur (14) est un moteur oléodynamique et **en ce que** lesdits moyens comprennent une pompe oléodynamique (17) reliée au moteur (M) à combustion interne par l'intermédiaire de conduites d'alimentation (16) et destinée à alimenter ledit moteur oléodynamique (15).

4. Le système (10) de post-traitement selon la revendication 1, **caractérisé en ce que** ledit moteur (15) de l'aspirateur (14) est un moteur électrique en courant continu ou en courant alternatif et **en ce que** lesdits moyens comprennent un module de contrôle relié au moteur à combustion interne, ledit module de contrôle étant destiné à faire varier la vitesse du moteur électrique (15) de l'aspirateur en fonction du nombre de tours du moteur (M) à combustion interne selon la loi de dépendance la plus avantageuse.

5. Le système (10) de post-traitement selon la revendication 1, **caractérisé en ce que** ledit moteur (15) de l'aspirateur (14) est relié au moteur (M) à combustion interne par l'intermédiaire de systèmes de transmission mécanique ou de systèmes à engrenages ou à courroie - poulie.

6. Le système (10) de post-traitement selon la revendication 1, **caractérisé en ce que** ledit aspirateur (14) est de type centrifuge ou volumétrique.

7. Le système (10) de post-traitement selon la revendication 1, **caractérisé en ce que** ledit système (10) est disposé en aval de l'extrémité du tuyau d'échappement (3) du silencieux (2) et présente un cône d'aspiration (11).

8. Le système (10) de post-traitement selon la revendication 1, **caractérisé en ce que** ledit dispositif de neutralisation (13) comprend un filtre pour la filtration des particules en suspension, précédé ou suivi par un dispositif de neutralisation d'aériformes ou d'aérosols.

9. Le système (10) de post-traitement selon la revendication 1, **caractérisé en ce que** ledit dispositif de neutralisation (13) est un dispositif de neutralisation de substances volatiles, d'aériformes et d'aérosols.

10. Le système (10) de post-traitement selon la revendication 1, **caractérisé en ce que** ledit dispositif de neutralisation (13) est un filtre à particules.
